# EUROPEAN PATENT SPECIFICATION

(11) **EP 0 332 915 B1**
(45) Date of publication and mention of the grant of the patent: **11.08.1993**
(21) Application number: 89103417.5
(22) Date of filing: 27.02.1989
(51) Int. Cl.: F16F 1/38, B60K 5/12, B60G 13/00

(54) **Perfected elastic support and process for manufacturing the same**
Elastische Aufhängung und deren Herstellungsverfahren
Suspension élastique et procédé pour sa fabrication

(30) Priority: 01.03.1988 IT 6715788
(43) Date of publication of application: 20.09.1989
(73) Proprietor: FIAT AUTO S.p.A., 10135 Torino (IT)
(72) Inventor: Leonardis, Raffaele, I-10100 Torino (IT)
(74) Representative: Jorio, Paolo

(56) References cited:
- DE-A- 3 619 850
- FR-A- 1 324 607
- GB-A- 989 447
- GB-A- 1 530 312

## Description

The present invention relates to a perfected elastic support for connecting two members, in particular, a vehicle body to a mechanical component on the vehicle, such as the engine or shock absorber; as well as to a process for manufacturing the same.

Numerous mechanical vehicle components, such as the engine or shock absorbers, are known, e.g. from GB-A-1530312, to be secured to the vehicle body via elastic supports. These, particularly, the ones supporting the engine, consist of a connecting bush for the part being secured, in this case, the engine block connecting bracket; an elastic shim made of elastomeric material; and an asymmetrical armature housing the elastic shim and screwed to the vehicle body. Supports of the aforementioned type present numerous drawbacks. Firstly, the armature housing the shim is both heavy and of relatively complex design, due to the body assembly screw seats being formed on the same. This, of course, weakens the armature itself, thus requiring the use of strengtheners which, in addition to complicating production and assembly of the armature, also results in a considerable increase in the total weight of the vehicle, as well as in fuel consumption.

Otherwise, welded connections such as e.g. that shown in FR-A-1324607 cannot be used with pieces having a bonded elastomeric element without damaging the same.

The aim of the present invention is to provide an elastic support for connecting two mechanical vehicle members, and which is both lightweight and of straightforward design, for overcoming the aforementioned drawbacks typically associated with known types of supports. With this aim in view, according to the present invention, there is provided an elastic support for connecting two members, in particular, for securing a mechanical vehicle component to the vehicle body, as defined in Claim 1.

A further aim of the present invention is to provide a process for manufacturing such a support. With this aim in view, according to the present invention, there is also provided a process for manufacturing an elastic support for connecting two members as defined in Claim 6.

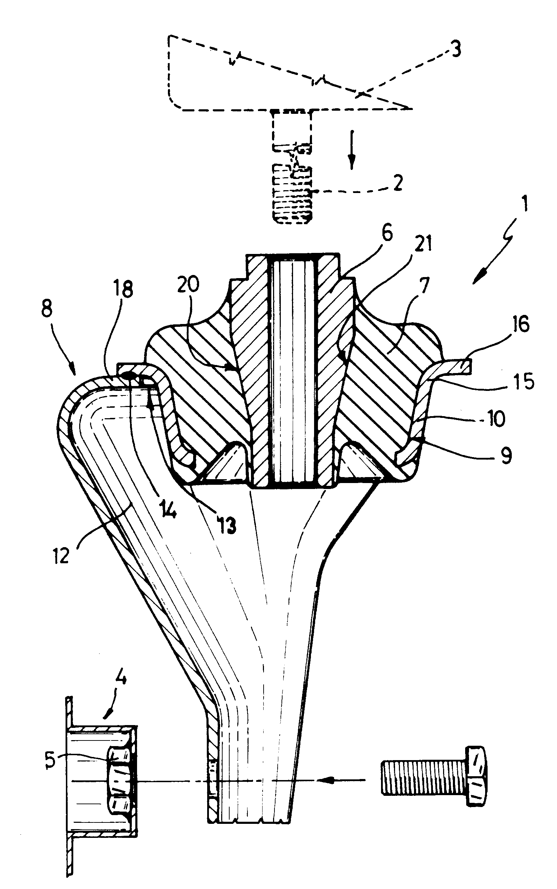

A non-limiting embodiment of the present invention will be described by way of example with reference to the accompanying drawing showing a cross section of the same.

Number 1 in the accompanying drawing indicates an elastic support for connecting two members, in this case, a known connecting bracket 2 of a known internal combustion engine 3 to the body 4 of any known type of vehicle (not shown). On said body 4 is welded a nut 5 on which to secure support 1. Said support 1 comprises a known central connecting element 6 defined by a substantially rigid, cylindrical metal bush, e.g. cast or pressed, designed to receive connecting bracket 2 for supporting part of engine 3; an elastically deformable annular shim 7 molded from elastomeric material, e.g. rubber; and an external armature 8 for shim 7, formed from substantially rigid sheet metal and secured integral with body 4, e.g. by means of nut 5 as in the example shown, or in any other appropriate manner. Shim 7 is of known design, located between elements 6 and 8, and secured externally integral with bush 6, preferably by means of curing. Armature 8 is secured externally integral with outer surface 9 and shim 7, again preferably by means of curing.

According to the present invention, armature 8 is formed in two separate parts connected in gapfree manner to produce a single self-supporting element. In more detail, armature 8 comprises a metal coupling 10 in the form of an axially-symmetrical annular body of revolution secured coaxial with and directly integral with the outer surface 9 of annular shim 7; and a metal supporting bracket 12 connectable to body 4 and having an upper seat 13 for housing coupling 10. According to the present invention, coupling 10 is connected rigidly integral with bracket 12, in gapfree manner by means of a continuous weld bead 14. In particular, bracket 12 is larger than coupling 10 and so designed to ensure a high degree of structural rigidity of the same. Coupling 10 is substantially in the form of a truncated cone and presents, at its wider end 15, an edge 16 turned substantially ninety degrees outwards, so as to define a flange portion designed to overlap a respective edge 18 of seat 13. Continuous weld bead 14 is formed about seat 13, with no weld material, by locally melting edges 16 and 18. Central connecting element or bush 6 is located coaxial with coupling 10 inside elastomeric shim 7, and preferably presents a conical outer lateral surface 20 having substantially the same taper ratio as coupling 10 and cured directly to the inner lateral surface 21 of shim 7.

Support 1 according to the present invention is produced as follows. Bush 6 is formed in known manner, and coupling 10 pressed and blanked from sheet steel, separately from bracket 12. Elements 6 and 10 are then positioned coaxially inside a known type of injection mold, and liquid elastomeric material injected between them to form shim 7. As it sets, shim 7 is cured by means of a known process, which provides for generating chemical bonds for securing shim 7 integral with elements 6 and 10, and so producing a subassembly which is subsequently fitted to bracket 12 pressed and blanked separately in known manner from sheet steel. According to the present invention, said subassembly is secured to bracket 12 by gapfree welding overlapping edges 16 and 18 using a low thermal dispersion weld process, so as to produce, with no weld material, but by locally melting edges 16 and 18, continuous weld bead 14 and, consequently, armature 8 by joining elements 10 and 12. It should be pointed out that welding elements 10 and 12 by means of a low thermal dispersion weld process, e.g. laser welding, is essential for the purpose of the present invention. Any other welding process, in fact, would result in heating of coupling 10 and, consequently, irreperable damage to rubber shim 7, or at least detachment of the same from the inner wall of coupling 10. The finished support 1 resulting from the above operations may then be fitted to body 4 by means of nuts 5 or in any other appropriate manner. By virtue of bracket 12 being considerably larger than coupling 10, it is capable of withstanding any overheating, and consequently safeguarding against any damage to rubber shim 7, caused by electrically spot welding bracket 12 to body 4. Similarly, even in the example shown, wherein bracket 12 is screwed to body 4, the holes housing said screws in no way weaken the overall structure of armature 8 by virtue of the structural rigidity of bracket 12, in which said holes are formed, being ensured by securing bracket 12 to a highly rigid element such as coupling 10.

The advantages of the present invention will be clear from the foregoing description. In particular, it provides for a support which, in addition to being of extremely straightforward design and cheap and easy to produce, is lightweight as compared with similar known supports, by virtue of eliminating the screw fasteners between coupling 10 and bracket 12 as on traditional armatures, and so reducing the thickness of bracket 12 required for ensuring the overall rigidity of armature 8. Moreover, armature 8 may be of any shape and size as required for ensuring structural rigidity, the assembly of armature 8 to elastomeric shim 7 being made possible by dividing the armature into two separate parts, only the smaller of which is inserted inside the mold for forming shim 7. This is only made possible by assembling bracket 12 and coupling 10, complete with shim 7, by means of a low thermal dispersion, e.g. laser, welding process.

## Claims

1. An elastic support (1) for connecting two members, in particular, for securing a mechanical vehicle component (2) to the vehicle body (4); said support (1) comprising a substantially rigid, central connecting element (6) connectable to a first of said members (2,4); and elastically deformable annular shim (7) made of elastomeric material and secured externally integral with said central connecting element (6); and a substantially rigid armature (8) for said elastomeric shim (7), secured externally integral with the same acid connectable to a second of said members (2,4); said external armature (8) for said elastomeric shim (7) comprising a metal coupling (10) in the form of an axially-symmetrical annular body of revolution secured coaxially with and directly integral with an outer surface of said annular elastomeric shim; and a metal supporting bracket (12) connectable to said second member and having a seat (13) for housing said coupling (10); characterized in that said coupling (10) is connected rigidly integral with said bracket in gapfree manner by means of a continuous weld bead (14).

2. An elastic support as claimed in Claim 1, characterised by the fact that said bracket (12) is larger than said coupling (10).

3. An elastic support as claimed in Claim 1 or 2, characterised by the fact that said coupling (10) is substantially in the form of a truncated cone and presents, at its wider end, an edge turned substantially ninety degrees outwards, so as to define a flange portion (16) designed to overlap a respective edge (18) of said seat (13).

4. An elastic support as claimed in Claim 3, characterised by the fact that said continuous weld bead (14) is formed about said seat, with no weld material, and by locally melting said edges (18, 16) of said seat and said coupling.

5. An elastic support as claimed in Claim 3 or 4, characterised by the fact that said central connecting element is defined by a substantially cylindrical bush (6) coaxial with said coupling inside said elastomeric shim and having a conical outer surface having substantially the same taper ratio as said coupling.

6. A process for manufacturing an elastic support (1) for connecting two members (2,4) and comprising a substantially rigid, central connecting element (6) connectable to a first of said members (2,4); an elastically deformable annular shim (7) made of elastomeric material and secured externally integral with said central connecting element (6); and a substantially rigid armature (8) for said elastomeric shim (7), secured externally integral with the same and connectable to a second of said members (2,4); said process providing for separately forming a metal coupling (10) in the form of an axially-symmetrical annular body of revolution, and a metal supporting bracket (12) larger than said coupling and designed for connection to said second member; said coupling subsequently being connected coaxial with and directly integral with an outer surface (9) of said annular shim, and said bracket subsequently being connected, in gapfree manner, to an edge of said coupling so as to produce said armature (8);
characterised by the fact that said coupling (10) is connected to said bracket (12) by means of a continuous weld bead obtained by laser welding said coupling and said bracket together in a localized, low thermal dispersion weld process.

## Patentansprüche

1. Elastische Halterung (1) zum Verbinden zweier Bauteile, insbesondere zum Befestigen eines mechanischen Bauteils (2) eines Fahrzeugs mit der Karosserie (4) des Fahrzeugs, wobei die Halterung (1) ein im wesentliches steifes, zentrales Verbindungselement (6), verbindbar mit einem ersten dieser Bauteile (2, 4), einen elastisch verformbaren kreisringförmigen Abstandshalter (7), der aus elastomerischem Material gefertigt ist und der von außen integral mit dem zentralen Verbindungselement (6) verbunden ist und eine im wesentlichen steife Aufnahme (8) für den elastomerischen Abstandshalter (7) aufweist, die von außen integral mit diesem verbunden ist, und die mit einem zweiten der Bauteile (2,4) verbindbar ist, und wobei die außenliegende Aufnahme (8) für den elastomerischen Abstandshalter (7) ein metallisches Verbindungsstück (10) in Form eines axialsymmetrischen, kreisringförmigen Drehkörpers, der koaxial und unmittelbar integral mit einer äußeren Obefläche des ringförmigen elastomerischen Abstandshalters verbunden ist und eine metallische Halteklammer (12) aufweist, die mit dem zweiten Bauteil verbindbar ist und die eine Auflagefläche (13) zum Aufnehmen des Verbindungsstücks (10) hat, dadurch gekennzeichnet, daß das Verbindungsstück (10) integral steif mit der Klammer mittels einer kontinuierlichen Schweißraupe (14) lückenlos verbunden ist.

2. Elastische Halterung nach Anspruch 1, dadurch gekennzeichnet, daß die Klammer (12) größer ist als das Verbindungsstück (10).

3. Elastische Halterung nach Anspruch 1 oder 2, dadurch gekennzeichnet, daß das Verbindungsstück (10) im wesentlichen die Form eines Kegelstumpfes hat und an seinem weiteren Ende eine Kante im wesentlichen um 90° nach außen zeigt, um so einen Flanschbereich (16) zu begrenzen, der dazu vorgesehen ist, die jeweilige Kante (18) der Auflagefläche (13) zu überlappen.

4. Elastische Halterung nach Anspruch 3, dadurch gekennzeichnet, daß die kontinuierliche Schweißraupe (14) um diese Auflagefläche ohne Schweißmaterial und durch lokales Verschmelzen der Kanten (18, 16) der Auflagefläche und des Verbindungsstücks ausgebildet wird.

5. Elastische Halterung nach Anspruch 3 oder 4, dadurch gekennzeichnet, daß das zentrale Verbindungselement durch eine im wesentlichen zylindrische Buchse (6) dargestellt wird, die koaxial mit dem Verbindungsstück in dem elastomerischen Abstandshalter ist und die eine konische äußere Oberfläche hat, die im wesentlichen denselben Verjüngungsgrad hat wie das Verbindungsstück.

6. Verfahren zum Herstellen einer elastischen Halterung (1) zum Verbinden zweier Bauteile (2, 4), die im wesentlichen ein steifes, zentrales Verbindungselement (6), das mit einem ersten der Bauteile (2, 4) verbindbar ist, einen elastisch verformbaren kreisringförmigen Abstandshalter (7), der aus elastomerischem Material besteht und der von außen integral mit dem zentralen Verbindungselement (6) verbunden ist, und eine im wesentlichen steife Aufnahme (8) für den elastomerischen Abstandshalter (7) aufweist, die von außen integral mit demselben verbunden und mit dem zweiten Bauteil (2,4) verbindbar ist, wobei das Verfahren das getrennte Ausbilden eines metallischen Verbindungsstücks (10) in der Form eines axial-symmetrischen kreisringförmigen Drehkörpers und einer metallischen Halteklammer (12), die größer als das Verbindungsstück ist, und die zum Verbinden mit dem zweiten Bauteil vorgesehen ist ermöglicht, das Verbindungsstück nachfolgend koaxial und unmittelbar integral mit einer äußeren Oberfläche (9) des ringförmigen Abstandshalters verbunden wird und die Klammer darauffolgend lückenlos mit einer Kante des Verbindungsstücks verbunden wird, so daß die Aufnahme (8) erzeugt wird, dadurch gekennzeichnet, daß das Verbindungsstück (10) mit der Klammer (12) durch eine kontinuierliche Schweißraupe verbunden wird, die durch Laser-Schweißen des Verbindungsstücks und der Klammer mittels eines örtlich begrenzten Niedertemperatur-Dispersionsschweißverfahrens erhalten wird.

## Revendications

1. Support élastique (1) pour relier deux organes, en particulier pour fixer un composant mécanique de véhicule (2) au châssis du véhicule (4), ledit support (1) comprenant un élément de connexion central sensiblement rigide (6) connectable à un premier desdits organes (2,4) ; un élément compensateur annulaire élastiquement déformable (7) fabriqué en une matière élastomère et fixé extérieurement solidairement audit élément central de connexion (6) ; et une armature sensiblement rigide (8) pour ledit élément compensateur en élastomère (7), fixée extérieurement et solidairement à ce dernier et connectable à un deuxième desdits organes (2,4) ; ladite armature extérieure (8) pour ledit élément compensateur en élastomère (7) comprenant une pièce de couplage en métal (10), sous la forme d'un corps de révolution annulaire axialement symétrique fixé coaxialement et directement solidairement à une surface extérieure dudit élément compensateur annulaire en élastomère, et une équerre de montage en métal (12) connectable audit deuxième organe et présentant un siège (13) pour recevoir ladite pièce de couplage (10) ; caractérisé en ce que ladite pièce de couplage (10) est reliée de façon rigidement solidaire à la dite équerre sans espace intermédiaire,au moyen d'un cordon de soudure continu (14).

2. Support élastique suivant la revendication 1, caractérisé en ce que ladite équerre (12) est plus grande que ladite pièce de couplage (10).

3. Support élastique suivant la revendication 1 ou 2, caractérisé en ce que ladite pièce de couplage (10) est sensiblement en forme de tronc de cône et présente, à son extrémité la plus large, un bord rabattu sensiblement à 90° vers l'extérieur de manière à définir une collerette (16) pouvant chevaucher un bord respectif (18) dudit siège (13).

4. Support élastique suivant la revendication 3, caractérisé en ce que ledit cordon de soudure continu (14) est formé autour dudit siège, sans apport de matière de soudage, par fusion locale desdits bords (18,16) dudit siège et de ladite pièce de couplage.

5. Support élastique suivant la revendication 3 ou 4, caractérisé en ce que ledit élément central de connexion est défini par un manchon sensiblement cylindrique (6) coaxial à ladite pièce de couplage, placé à l'intérieur dudit élément compensateur en élastomère, et présentant une surface extérieure conique qui a sensiblement la même conicité que ladite pièce de couplage.

6. Procédé de fabrication d'un support élastique (1) pour connecter deux organes (2,4) et comprenant un élément de connexion central sensiblement rigide (6) connectable à un premier desdits organes (2,4) ; un élément compensateur annulaire élastiquement déformable (7) fabriqué en une matière élastomère et fixé extérieurement de façon solidaire audit élément de connexion central (6) ; et une armature sensiblement rigide (8) pour ledit élément compensateur en élastomère (7), fixée extérieurement de façon solidaire à ce dernier et connectable à un deuxième desdits organes (2,4) ; ledit procédé comprenant la préparation séparée d'une pièce de couplage en métal (10), sous la forme d'un corps de révolution annulaire axialement symétrique, et d'une équerre de fixation en métal (12) plus grande que ladite pièce de couplage et prévue pour une connexion audit deuxième organe ; ladite pièce de couplage étant ensuite connectée coaxialement et de façon directement solidaire à une surface extérieure (9) dudit élément compensateur annulaire, et ladite équerre étant ensuite reliée, sans laisser d'intervalle, à un bord de ladite pièce de couplage afin de constituer la dite armature (8) ; caractérisé en ce que ladite pièce de couplage (10) est reliée à ladite équerre (12) au moyen d'un cordon de soudure continu obtenu par soudage au laser de ladite pièce de couplage et de ladite équerre l'une à l'autre par un procédé de soudage localisé à faible dispersion thermique.
